# EUROPÄISCHE PATENTANMELDUNG

(11) **EP 3 613 556 A1**
(43) Veröffentlichungstag der Anmeldung: **26.02.2020**
(21) Anmeldenummer: 18190724.7
(22) Anmeldetag: 24.08.2018
(51) Int. Cl.: B29C 51/36, B29C 33/36, B21D 24/00

(54) **TIEFZIEHVORRICHTUNG UND VERFAHREN ZUM TIEFZIEHEN VON FOLIE**

(71) Anmelder: Harro Höfliger Verpackungsmaschinen GmbH, 71573 Allmersbach im Tal (DE)
(72) Erfinder: THALER, Andreas, 71573 Allmersbach im Tal (DE); EGELKRAUT, Udo, 71573 Allmersbach im Tal (DE)
(74) Vertreter: Zurhorst, Stefan

(57) **Zusammenfassung**

Die Erfindung betrifft eine Tiefziehvorrichtung und ein Verfahren zum Tiefziehen von Folie. Die Vorrichtung umfasst eine Anordnung von mehreren Matrizenplatten (4), wobei jede Matrizenplatte (4) mehrere Rahmenvakuumbohrungen (23) und mindestens eine Matrizenform (22) mit mindestens einer Matrizenvakuumbohrung (24) aufweist. Mindestens ein Vakuumkanal (12, 13) verbindet eine Vakuumquelle (31, 32) mit der Matrizenvakuumbohrung (24) der Matrizenform (22) und mit den Rahmenvakuumbohrungen (23) der Matrizenplatte (4). Die Tiefziehvorrichtung (1) umfasst für jede Matrizenplatte (4) eine Schließeinrichtung (10) zum Schließen und Öffnen des mindestens einen Vakuumkanals (12, 13). Der Matrizenplatte (4) wird ein einzelnes Folienblatt zugeführt. Die Schließeinrichtung (10) öffnet den mindestens einen Verbindungskanal (12, 13) an der entsprechenden Matrizenplatte (4). Nach Öffnen des mindestens einen Verbindungskanals (12, 13) wird das Folienblatt auf die Matrizenplatte (4) aufgelegt. Danach wird die Folie durch ein Haltevakuum an den Rahmenvakuumbohrungen (23) gehalten und durch ein Tiefziehvakuum an den Matrizenvakuumbohrungen (24) in der Matrizenform (22) tiefgezogen.

## Beschreibung

Die Erfindung betrifft eine Tiefziehvorrichtung zum Tiefziehen von Folie der im Oberbegriff des Anspruchs 1 angegebenen Gattung sowie ein Verfahren zum Tiefziehen von Folie.

Zum Tiefziehen von Folie, insbesondere von einzelnen Folienblättern, sind Tiefziehvorrichtungen bekannt, welche die Folien mittels eines Tiefziehvakuums umformen. Die Tiefziehvorrichtungen umfassen eine umlaufende, geschlossene Anordnung von Matrizenplatten, die beispielsweise über eine Kette angetrieben bewegt werden. Die Matrizenplatten werden in Reihe über eine Vakuumliefervorrichtung gezogen. Die Vakuumliefervorrichtung ist derart gestaltet, dass eine Vielzahl von Matrizen gleichzeitig auf der Vakuumliefervorrichtung entlanggleiten und dabei mit Vakuum versorgt werden. Die Matrizenplatten sind über Kanäle mit der Vakuumliefervorrichtung strömungsverbunden, so dass die Luft an den Matrizenformen der Matrizenplatte durch Matrizenvakuumbohrungen hindurch abgesaugt wird. Zudem sind an den Matrizenplatten Rahmenvakuumbohrungen ausgebildet, die ebenfalls über entsprechende Kanäle mit der Vakuumliefervorrichtung strömungsverbunden sind. Zum Umformen eines Folienblattes wird dieses auf eine Matrizenplatte aufgelegt. Über die Vakuumliefervorrichtung wird an den Rahmenvakuumbohrungen Luft abgesaugt. Dabei wird das Folienblatt an die Rahmenvakuumbohrungen angesaugt und auf der Matrizenplatte festgehalten. Durch den an der Matrizenform anliegenden Unterdruck wird die Folie in die Matrizenform hineingezogen und umgeformt.

Nachteilig an derartigen Tiefziehvorrichtungen ist, dass diese bisher nicht mit einer vollbestückten, sondern lediglich mit einer teilbestückten Matrizenanordnung betrieben werden konnten. Die teilbestückte Matrizenanordnung enthält neben den Matrizenplatten auch sogenannte Dummyplatten, die keinen Unterdruck aus der Vakuumliefervorrichtung abgreifen. Dies beruht auf der Notwendigkeit einer sicheren Vakuumführung. Die zugehörige Vakuumliefervorrichtung ist typischerweise derart ausgelegt, dass sie den kompletten Zyklus von der Folienzufuhr über das Erwärmen, Tiefziehen und ggf. auch Füllen und Absiegeln begleitet. An den Rändern muss über die Rahmenvakuumbohrungen vom Anfang bis zum Ende der Prozessschritte ein Haltevakuum aufgebracht werden. In den Matrizenformen muss durch Matrizenvakuumbohrungen hindurch zunächst ein höheres Tiefziehvakuum aufgebracht werden, was anschließend an das Tiefziehen durch das genannte Haltevakuum ersetzt wird. Um dies zu erreichen, muss aber vermieden werden, dass sich eine Matrizenplatte ohne aufliegender Folie über der Vakuumliefervorrichtung befindet. In einem solchen Falle würde durch die dann frei liegenden Bohrungen quasi widerstandslos Umgebungsluft angesaugt werden. Als Folge ginge der Unterdruck in der Vakuumliefervorrichtung verloren, womit die Prozessschritte an den übrigen Matrizenplatten behindert wären.

Die Vakuumliefervorrichtung erstreckt sich üblicherweise über eine Länge, die etwa 40 Prozent der Umfangslänge der Kette von Matrizenplatten entspricht. Im Extremfall beispielweise beim Anfahren des Prozesses würden bei einer vollbestückten Kette diese 40 Prozent von Matrizenplatten ohne Abdeckung sein. Durch die zugehörigen Vakuumbohrungen würde zu viel Falschluft gezogen werden. Eine teilbestückte Matrizenanordnung bekannter Tiefziehvorrichtungen besteht folglich nur zu etwa 60 Prozent aus Matrizenplatten. Die verbleibenden etwa 40 Prozent sind durch Dummyplatten ohne Verbindung zur Vakuumliefervorrichtung ausgebildet, um insbesondere ein Anfahren und auch ein Leerfahren des Prozesses ohne Vakuumverlust durch nicht abgedeckte Matrizenplatten zu ermöglichen. Die Dummyplatten sind aber nicht zum Tiefziehen von Folie geeignet, was sich negativ auf die Auslastung derartiger Tiefziehvorrichtungen ausübt.

Der Erfindung liegt die Aufgabe zugrunde, eine gattungsgemäße Tiefziehvorrichtung derart weiterzubilden, dass die Auslastung der Tiefziehvorrichtung verbessert wird.

Diese Aufgabe wird durch eine Tiefziehvorrichtung mit den Merkmalen des Anspruchs 1 gelöst.

Der Erfindung liegt des Weiteren die Aufgabe zugrunde, ein Verfahren zum Betrieb der Tiefziehvorrichtung anzugeben, mittels dem die Auslastung der Tiefziehvorrichtung verbessert werden kann.

Diese Aufgabe wird durch ein Verfahren mit den Merkmalen des Anspruchs 8 gelöst.

Die erfindungsmäße Tiefziehvorrichtung zum Tiefziehen von Folie umfasst mindestens einen Vakuumkanal für jede Matrizenplatte. Mindestens ein Vakuumkanal verbindet mindestens eine Vakuumquelle mit der Matrizenvakuumbohrung der Matrizenform. Zudem verbindet mindestens ein Vakuumkanal mindestens eine Vakuumquelle mit den Rahmenvakuumbohrungen der Matrizenplatte. Die Tiefziehvorrichtung umfasst für jede Matrizenplatte eine Schließeinrichtung zum Schließen und Öffnen des mindestens einen Vakuumkanals.

Die Schließeinrichtung dient dazu, den mindestens einen Vakuumkanal, also die Verbindung zwischen Vakuumliefervorrichtung und der Matrizenplatte bedarfsgerecht zu schließen und zu öffnen. Folglich kann die Schließeinrichtung den von der Vakuumliefervorrichtung erzeugten Unterdruck gegenüber der Matrizenplatte sperren oder freigeben. Ist die Schließeinrichtung geöffnet, liegt ausgehend von der Vakuumliefervorrichtung über den mindestens einen Vakuumkanal ein Unterdruck an den Vakuumöffnungen der Matrizenform und/oder an den Rahmenvakuumbohrungen an. Ist die Schließeinrichtung in geschlossener Stellung, sperrt sie den betreffenden Vakuumkanal, so dass der Unterdruck nicht an die zugeordneten Vakuumbohrungen gelangt.

Im Betrieb der Tiefziehvorrichtung wird der Matrizenplatte ein einzelnes Folienblatt zugeführt. Die Schließeinrichtung schaltet von einer geschlossenen Stellung ausgehend in eine Offenstellung und öffnet den mindestens einen Verbindungskanal an der entsprechenden Matrizenplatte. Nach Öffnen des mindestens einen Verbindungskanals wird das Folienblatt auf die Matrizenplatte aufgelegt. Der von der Vakuumliefervorrichtung erzeugte Unterdruck gelangt durch den betreffenden Vakuumkanal hin zu den Rahmenvakuumbohrungen, so dass das Folienblatt an den Rahmenvakuumbohrungen angesaugt und mittels eines Haltevakuums gehalten wird. Dabei ist das Folienblatt über die Matrizenform gespannt und schließt diese im Wesentlichen luftdicht ab. Analog dazu liegt auch ein Unterdruck an der Vakuumöffnung der Matrizenform an, welcher das Folienblatt, das an den Rahmenvakuumbohrungen gehalten wird, in die Matrizenform hinein zieht und anschließend mit reduziertem Niveau dort hält. Wird das Folienblatt nach dem Tiefziehprozess wieder aus der Matrizenform entnommen, wird die Schließeinrichtung in die geschlossene Stellung zurückgestellt. Dadurch wird vermieden, dass die Vakuumliefervorrichtung Luft ansaugt und der Unterdruck abfällt.

Beim Anfahren der Tiefziehvorrichtung sind anfangs die Schließeinrichtungen aller Matrizenplatten in geschlossenem Zustand. Vor Auflage eines ersten Folienblattes auf eine erste Matrizenplatte wird zunächst nur deren Schließeinrichtung geöffnet. Der an der Vakuumöffnung und den Rahmenvakuumbohrungen anliegende Unterdruck ist ausreichend groß, um das Folienblatt anzusaugen, luftdicht abzuschließen und an den Rändern zu halten. Nach dem Tiefziehen verschließt das tiefgezogene Folienblatt neben den Rahmenvakuumbohrungen auch die Matrizenvakuumbohrung der Matrizenform, so dass an keiner Stelle über die Maßen Unterdruck verloren geht. Vielmehr kann ein entsprechend großer Unterdruck erneut aufgebaut werden. Im einfachsten Fall des regulären Betriebes bleibt die Schließeinrichtung der ersten Matrizenplatte geöffnet. Mit Auflegen je eines weiteren Folienblattes auf je eine nachfolgende Matrizenplatte wird nur deren Schließeinrichtung geöffnet, worauf hin Vakuumaufbau und Abdichtung der Vakuumbohrungen in gleicher Weise folgen. Durch das bedarfsgerechte Schalten der Schließeinrichtung der Matrizenplatten kann der notwendige Unterdruck im Gesamtsystem aufrechterhalten werden. Dadurch kann ein Anfahren in vollbestückter Matrizenanordnung ohne die Verwendung von Dummyplatten ermöglicht werden. Die Produktionsauslastung kann um etwa 40% erhöht werden.

Darüber hinaus ergeben sich aus der Erfindung weitere Möglichkeiten. Zum Beispiel ist eine Vollbestückung der Kette mit Formatplatten zwar möglich, aber nicht zwingend erforderlich. Das System kann bedarfsabhängig auch mit nur einzelnen Formatplatten betrieben werden. Der Rüstaufwand verringert sich hierbei erheblich. Außerdem können mehrere unterschiedliche Formatplatten gleichzeitig auf der Kette montiert sein und je nach Rezeptur gezielt aktiviert und deaktiviert werden. Zusätzlich besteht die Möglichkeit, die Matrizenplatten nach dem Tiefziehen zu schließen, z.B. bei einem fehlerhaften Prozessschritt.

Vorzugsweise weist die Tiefziehvorrichtung zwei Vakuumkanäle und zwei Vakuumquellen auf. Die mindestens eine Matrizenvakuumbohrung 24 und die eine Vakuumquelle 31 sind mittels des einen Vakuumkanals strömungsleitend verbindbar. Die Rahmenvakuumbohrungen und die andere Vakuumquelle sind mittels des anderen Vakuumkanals mit der Vakuumliefervorrichtung strömungsverbindbar. Beide Vakuumkanäle sind mittels der Schließeinrichtung schließbar und öffenbar. Durch die separate Ausgestaltung der Vakuumkanäle können die Rahmenvakuumbohrungen sowie die Vakuumöffnungen verschieden angesteuert und entsprechend mit Unterdruck versorgt werden. Dadurch kann beispielsweise eine Versorgung mit einem vergleichsweise geringen Halteunterdruck und einem demgegenüber höheren Tiefziehunterdruck erfolgen.

Es ist vorteilhaft vorgesehen, dass die Schließeinrichtung ein Schieberelement umfasst, das in eine Schließstellung und in eine Offenstellung des mindestens einen Vakuumkanals bzw. der Vakuumkanäle verschiebbar ist. Ferner ist das Schieberelement vorzugsweise zwischen einer Trägerplatte der Tiefziehvorrichtung und der Matrizenplatte mittels eines ersten Gleitelementes und eines zweiten Gleitelementes gelagert. Das Schieberelement ist vorteilhaft als eine Schieberplatte ausgeführt. Die Schließeinrichtung hat die Funktion eines Sperrventils, welches den Durchflussquerschnitt der Vakuumkanäle sperrt und öffnet. Durch die Ausgestaltung des Schieberelementes als Schieberplatte kann eine vergleichsweise flache Bauweise der Schließeinrichtung realisiert werden. Durch die Gleitelemente wird das Schieberelement gelagert, so dass durch die Reduzierung der Reibung eine schnelle Schaltbewegung des Schieberelementes umgesetzt werden kann. Zudem kann der Verschleiß zwischen Schieberelement, Trägerplatte und Matrizenplatte vermieden werden.

Das Schieberelement weist vorzugsweise Rastöffnungen auf, die in der Schließstellung und der Offenstellung mit federnden Druckelementen der Tiefziehvorrichtung verrasten. Dadurch wird das Schieberelement in seinen jeweiligen Endpositionen, in diskreten Schaltstellungen, definiert gehalten.

Ein Ausführungsbeispiel der Erfindung wird im Folgenden anhand der Zeichnung erläutert. Es zeigen:
- Fig. 1: in einer perspektivischen Schnittdarstellung eine erfindungsgemäße Tiefziehvorrichtung mit einer Schließeinrichtung für in Fig. 2 näher gezeigte Vakuumkanäle,
- Fig. 2: in einer perspektivischen Schnittdarstellung die Tiefziehvorrichtung in Richtung des Pfeils II nach Fig. 1 mit Einzelheiten zur Ausgestaltung der Schließeinrichtung,
- Fig. 3: in einer perspektivischen Darstellung die erfindungsgemäße Schließeinrichtung mit Schieberplatte der Tiefziehvorrichtung nach den Fig. 1 und 2.

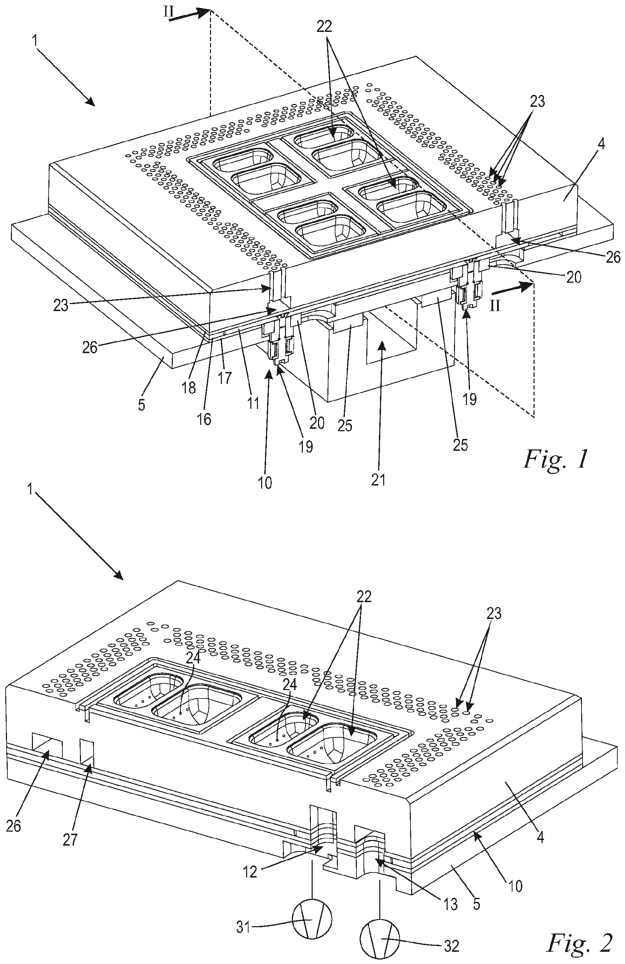

Fig. 1 zeigt einen Ausschnitt einer erfindungsgemäß ausgeführten Tiefziehvorrichtung zur Herstellung von Folienverpackungen in einer geschnittenen, perspektivischen Ansicht. Die Tiefziehvorrichtung 1 dient zum Tiefziehen von Folie und ist Teil einer hier nicht gezeigten Verpackungsmaschine zur Herstellung von Folienverpackungen. Derartige Verpackungen sind aus Kunststofffolie hergestellt, die in Form von Folienbahnen oder, wie im Ausführungsbeispiel, in Form von einzelnen Folienblättern bereitgestellt wird. Als Folienmaterial für Verpackungen eigenen sich besonders wasserlösliche Kunststoffe wie Polyvinylalkohol (PVOH), aber auch wasserunlösliche Kunststoffe können zur Herstellung derartiger Verpackungen verwendet werden. Die Verpackungen können beispielsweise für Reinigungs- oder Waschmittel sowohl in pulvriger als auch in hochviskoser (Gel) und niedrigviskoser flüssiger Form verwendet werden. Erfindungsgemäß tiefgezogene Verpackungen aus passenden Folienmaterialien eignen sich ebenfalls für den Einsatz im Pharmabereich zur Verpackung von Arzneimitteln. Die Folien werden in der Verpackungsmaschine mittels der Tiefziehvorrichtung durch Vakuum in eine entsprechende Verpackungsform, beispielsweise in eine Beutelform, tiefgezogen. Danach wird die Verpackungsform mit dem zu verpackenden Produkt befüllt und mit einer weiteren Folie versiegelt. Anschließend wird in einem letzten Verfahrensschritt die befüllte Folienverpackung aus den Folienblättern oder aus der Folienbahn mittels einer Schneidvorrichtung herausgetrennt.

Die erfindungsgemäße Tiefziehvorrichtung 1 umfasst eine Anordnung von mehreren Matrizenplatten 4. Die Anordnung besteht aus mindestens 10, insbesondere mindestens 20, bevorzugt etwa 40 Matrizenplatten oder mehr, die zueinander in einer umlaufenden Reihe angeordnet und durch eine Kette umlaufend angetrieben sind. Unabhängig von der Länge der Kette ist die Anzahl der Matrizenplatten 4 so zu wählen, dass eine Vollbestückung vorliegt. Wie in Fig. 1 gezeigt, ist die Matrizenplatte 4 auf einer Trägerplatte 5 befestigt. Die Tiefziehvorrichtung 1 umfasst eine Vakuumliefervorrichtung, welche mindestens eine, hier zwei in Fig. 2 angedeutete Vakuumquellen 31, 32 umfasst. Die Vakuumliefervorrichtung umfasst einen in ihrer Längsrichtung verlaufenden Versorgungskanal 21 sowie ebenfalls in Längsrichtung verlaufende Gleitschienen 25, auf welchen die Trägerplatte 5 aufliegt. Demnach wird der im Querschnitt U-förmige Versorgungskanal 21 nach oben durch die Gleitschienen 25 und die Trägerplatte 5 begrenzt. Im Betrieb der Tiefziehvorrichtung 1 liegt im Versorgungskanal 21 ein Haltevakuum bzw. ein Halteunterdruck an, welcher über die in Fig. 2 gezeigte Vakuumquelle 32 bereitgestellt wird.

Die Tiefziehvorrichtung 1 umfasst für jede Matrizenplatte 4 eine Schließeinrichtung 10. Die Schließeinrichtung 10 ist auf der Trägerplatte 5 befestigt, wobei die Matrizenplatte 4 wiederum auf der Schließeinrichtung 10 angeordnet ist. Mittels der Schließeinrichtung 10 wird der Matrizenplatte 4 Unterdruck aus der Vakuumliefervorrichtung zugeschaltet oder gesperrt. Die Schließeinrichtung 10 wird durch eine Verschiebeeinheit 19 entweder in eine Offenstellung oder in eine Schließstellung geschaltet. In der Offenstellung wird der Matrizenplatte 4 Unterdruck aus der Vakuumliefervorrichtung bereitgestellt. Befindet sich die Schließeinrichtung 10 in der Schließstellung, wird die Matrizenplatte 4 nicht mit Unterdruck versorgt.

Wie in Fig. 1 gezeigt, umfasst die Matrizenplatte 4 mindestens eine, hier mehrere Matrizenformen 22. Im Ausführungsbeispiel sind die Matrizenformen 22 und die Matrizenplatte 4 einteilig ausgebildet. Es kann auch zweckmäßig sein, die Matrizenformen 22 und die Matrizenplatte 4 mehrteilig auszubilden, so dass auf einfache Weise ein Austausch der Matrizenformen 22 erfolgen kann. Im Ausführungsbeispiel umfasst die Matrizenplatte 4 vier Matrizenformen 22, wobei auch eine andere Anzahl Matrizenformen 22 je Matrizenplatte 4 zweckmäßig sein kann. Die Matrizenformen 22 sind etwa im Zentrum der Matrizenplatte 4 angeordnet. Zudem weist die Matrizenplatte 4 eine Vielzahl an Rahmenvakuumbohrungen 23 auf, die um die Matrizenformen 22 verlaufend angeordnet sind. Die Rahmenvakuumbohrungen 23 münden in einen Rahmenkanal 26, der alle Rahmenbohrungen 23 miteinander verbindet.

In Fig. 2 ist die erfindungsgemäße Tiefziehvorrichtung 1 in perspektivischer Schnittdarstellung in Richtung des Pfeils II nach Fig. 1 gezeigt. Es ist diejenige Konfiguration gezeigt, die beim Auflegen und Tiefziehen der Folie zum Tragen kommt. Die Anordnung umfasst mindestens einen Vakuumkanal, hier einen ersten Vakuumkanal 12 und einen zweiten Vakuumkanal 13 Der erste Vakuumkanal 12 verläuft in der gezeigten Tiefziehkonfiguration ausgehend von der ersten Vakuumquelle 31 durch die Trägerplatte 5 über die Schließeinrichtung 10 bis in die Matrizenplatte 4. Innerhalb der Matrizenplatte 4 mündet der erste Vakuumkanal 12 in einen Matrizenkanal 27. Die Matrizenformen 22 weisen pro Formmulde jeweils mindestens eine, hier mehrere Matrizenvakuumbohrungen 24 auf, die ausgehend von der jeweiligen Matrizenform 22 in den Matrizenkanal 27 münden. Demnach sind die Matrizenformen in geöffneter Stellung der Schließeinrichtung 10 über die Matrizenvakuumbohrungen 24, den Matrizenkanal 27 und den ersten Vakuumkanal 12 mit der ersten Vakuumquelle 31 druck- und strömungsübertragend verbunden.

Der zweite Vakuumkanal 13 verläuft ausgehend von der zweiten Vakuumquelle 32 durch die Trägerplatte 5 über die Schließeinrichtung 10 und mündet in den Rahmenkanal 26. Demnach sind die Rahmenvakuumbohrungen 23 in geöffneter Stellung der Schließeinrichtung 10 über den Rahmenkanal 26 und den zweiten Vakuumkanal 13 mit der zweiten Vakuumquelle 32 druck- und strömungsübertragend verbunden.

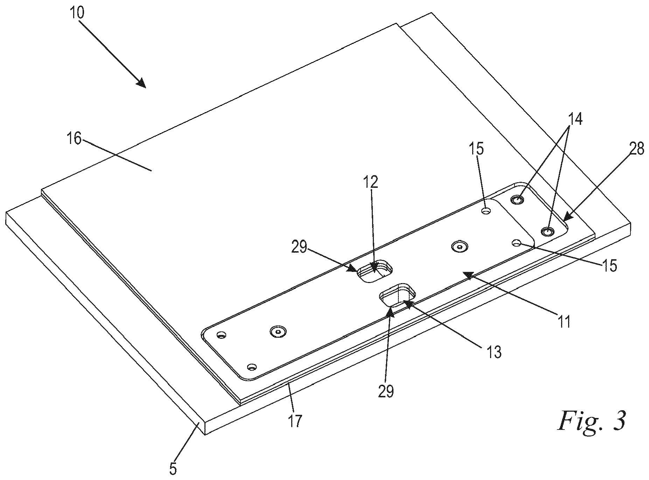

In Fig. 3 ist eine perspektivische Darstellung der Schließeinrichtung 10 gezeigt. Die Schließeinrichtung 10 umfasst eine Rahmenplatte 16 mit einer länglichen Öffnung 28 und ein Schieberelement 11, welches in der Öffnung 28 der Rahmenplatte 16 geführt ist. Im Ausführungsbeispiel ist das Schieberelement 11 als Schieberplatte ausgeführt und besitzt knapp die gleiche Dicke wie die Rahmenplatte 16. Aus Gründen der Verschiebbarkeit unter Beibehaltung der Dichtigkeit weist die Schieberplatte hinsichtlich ihrer Dicke gegenüber der Rahmenplatte 16 ein geringes Untermaß von wenigen hundertstel Millimetern auf. Die Schließeinrichtung 10 umfasst ein erstes Gleitelement 17, welches im Ausführungsbeispiel als Gleitplatte ausgebildet ist und zwischen der Trägerplatte 5 und der Rahmenplatte 16 angeordnet ist. Zudem umfasst die Schließeinrichtung 10 ein zweites Gleitelement 18 (Figuren 1 und 2), welches zwischen der Rahmenplatte 16 und der Matrizenplatte 4 angeordnet ist. Somit ist das Schieberelement 11 in der Öffnung 28 der Rahmenplatte 16 zwischen dem ersten Gleitelement 17 und dem zweiten Gleitelement 18 linear gelagert.

Wie in Fig. 3 gezeigt, weist das Schieberelement 11 pro Vakuumkanal 12, 13 eine Schieberöffnung 29 auf. Der Öffnungsquerschnitt der Schieberöffnungen 29 entspricht dem Querschnitt des ersten Vakuumkanals 12 und des zweiten Vakuumkanals 13. Ist die Schließeinrichtung 10 in geöffneter Stellung geschaltet, liegen die Schieberöffnungen 29 koaxial zu dem ersten Vakuumkanal 12 und dem zweiten Vakuumkanal 13. Der erste Vakuumkanal 12 und der zweite Vakuumkanal 13 sind geöffnet, so dass die Vakuumliefervorrichtung mit den Rahmenvakuumbohrungen 23 und den Vakuumöffnungen der Matrizenformen 22 druck- und strömungsübertragend verbunden ist und ein Unterdruck bereitgestellt wird. Wird das Schieberelement 11 durch die Verschiebeeinheit 19 in die geschlossene Stellung der Schließeinrichtung 10 bewegt, liegen die Schieberöffnungen 29 versetzt zu dem ersten Vakuumkanal 12 und dem zweiten Vakuumkanal 13. Dadurch sind der Luftdurchfluss und die Unterdruckübertragung des ersten Vakuumkanals 12 und des zweiten Vakuumkanals 13 durch das Schieberelement 11 gesperrt. An den Rahmenvakuumbohrungen 23 und den Vakuumöffnungen der Matrizenformen 22 liegt kein Unterdruck an.

Wie in Fig. 3 gezeigt, umfasst das Schieberelement 11 Rastöffnungen 15, die in den diskreten Endstellungen der Schließeinrichtung 10, also in der Offenstellung und der Schließstellung, mit federnden Druckelementen 14 verrasten. Die federnden Druckelemente 14 sind an der Trägerplatte 5 befestigt, durchragen das erste Gleitelement 17 und greifen in die Rastöffnungen 15 des Schieberelementes 11. Um eine Verrastung zwischen dem Schieberelement 11 und den federnden Druckelementen 14 zu lösen, ist eine Mindestverschiebekraft der Verschiebeeinheit 19 notwendig, um die federnden Druckelemente 14 wieder aus den Rastöffnungen herauszudrücken. Durch die Verrastung zwischen Schieberelement 11 und den federnden Druckelementen 14 ist das Schieberelement 11 in den diskreten Endstellungen gegen unerwünschte Verschiebebewegungen gesichert.

Durch die nachfolgende Beschreibung der Verfahrensschritte soll die Funktionsweise der Schließeinrichtung 10 verdeutlicht werden:
Zu Beginn eines Bearbeitungszyklusses liegen alle Matrizenplatten 4 frei. Keine von ihnen ist mit Folie abgedeckt. Bei zumindest denjenigen Matrizenplatten 4, die im Wirkungsbereich der Vakuumliefervorrichtung liegen, ist die jeweilige Schließeinrichtung 10 geschlossen, damit sich in der Vakuumliefervorrichtung ein Unterdruck aufbauen kann. Beim Anlaufen der Maschine und vor Auflage eines ersten Folienblattes schaltet die Schließeinrichtung 10 der ersten Matrizenplatte von einer geschlossenen Stellung ausgehend in eine Offenstellung. Dabei wird das Schieberelement 11 über die Verschiebeeinheit 19 in die Offenstellung geschoben, wodurch die Schieberöffnungen 29 koaxial zu den Vakuumkanälen 12, 13 angeordnet sind. Die Vakuumquellen 31, 32 sind mit den Vakuumöffnungen der Matrizenformen 22 und den Rahmenvakuumbohrungen 23 druck- und strömungsübertragend verbunden. Der von der zweiten Vakuumquelle 32 ausgehende Unterdruck gelangt durch den zweiten Vakuumkanal 13 zu den Rahmenvakuumbohrungen 23. Nachdem also der zweite Verbindungskanal 13 geöffnet wurde, wird das genannte Folienblatt auf die Matrizenplatte 4 aufgelegt. Das Folienblatt wird nun an den Rahmenvakuumbohrungen 23 angesaugt und mittels eines Haltevakuums gehalten. Dabei spannt sich das Folienblatt über die Matrizenformen 22 und schließt diese im Wesentlichen luftdicht ab. Ferner liegt in der Offenstellung der Schließeinrichtung 10 auch ein Unterdruck an den Matrizenvakuumbohrungen 24 der Matrizenformen 22 an. Dieser von der ersten Vakuumquelle 31 bereitgestellte Unterdruck weist als Tiefziehvakuum einen höheren Differenzdruck zum Umgebungsdruck auf als das vergleichsweise geringer ausgeprägte Haltevakuum der Rahmenvakuumbohrungen 23. In der Tiefziehkonfiguration nach Fig. 2 zieht das Tiefziehvakuum das Folienblatt, das an den Rahmenvakuumbohrungen 23 gehalten wird, in die Matrizenform 22 hinein und bewirkt damit eine tiefziehende, plastische Umformung der Folie.

Nach dem Tiefziehen werden die Matrizenplatten 4 zu nachfolgenden Bearbeitungsstationen beispielsweise zum Füllen und Versiegeln weitertransportiert. Hierbei bis hin zur letzten Bearbeitungsstation kommt der Versorgungskanal 21 (Fig. 1) zum Tragen. Hierüber kann eine druck- und strömungsübertragende Verbindung sowohl der Rahmenvakuumbohrungen 23 als auch der Matrizenvakuumbohrungen 24 mit der zweiten Vakuumquelle 32 hergestellt werden. Nach abgeschlossenem Tiefziehvorgang wirkt dann an den Rahmenvakuumbohrungen 23 und auch an den Matrizenvakuumbohrungen 24 nur noch das vergleichsweise geringe Haltevakuum. Die Rahmenvakuumbohrungen 23 und auch die Matrizenvakuumbohrungen 24 bleiben hierbei von der Folie bedeckt, so dass das Vakuum nicht zusammenbricht.

Nachfolgende Matrizenplatten 4 werden sukzessive eine nach der anderen analog zur oben beschriebenen ersten Matrizenplatte 4 freigeschaltet, bis sämtliche aktive Matrizenplatten im Wirkungsbereich der Vakuumliefervorrichtung in Betrieb genommen sind. Die dann fortlaufende Folienabdeckung der Rahmenvakuumbohrungen 23 und der Matrizenvakuumbohrungen 24 sorgt für eine konstante Unterdruckversorgung und damit für einen stabilen Betrieb. Die Schließeinrichtungen 10 derjenigen Matrizenplatten 4, die nach der letzten Bearbeitungsstation den Wirkungsbereich der Vakuumliefervorrichtung verlassen, müssen nicht zwingend wieder geschlossen werden, da keine Verbindung mehr mit den Vakuumquellen 31, 32 und folglich keine negative Rückwirkung auf das Unterdruckniveau besteht. Gleichwohl müssen aber nicht alle Matrizenplatten 4 in oben beschriebener Weise freigeschaltet werden. Es kann auch zweckmäßig sein, nur eine Auswahl davon freizuschalten, während die Schließeinrichtungen 10 von nicht aktiven Matrizenplatten 4 geschlossen bleiben können. Dies erlaubt beispielsweise die Bestückung der gesamten Kette mit zwei oder mehr unterschiedlichen Typen von Matrizenplatten 4, von denen jeweils nur diejenigen Matrizenplatten 4 eines ausgewählten Typs freigeschaltet werden. Außerdem besteht die Möglichkeit, im Fehlerfall einzelne Matrizenplatten 4 abzuschalten, um das Ansaugen von Fehlluft an entsprechender Stelle zu vermeiden.

Sofern nun ein Bearbeitungszyklus beendet werden soll, wenn also die Tiefziehvorrichtung leer gefahren werden soll, werden die einzelnen Schließeinrichtungen 10 in die geschlossene Stellung zurückgestellt. Dabei wird das Schieberelement 11 durch die Schiebereinheit 19 zurück in die Schließstellung verschoben, wodurch das Schieberelement 11 die Vakuumkanäle 12, 13 verschließt. Die Vakuumliefervorrichtung ist nicht mehr mit den Rahmenvakuumbohrungen 23 sowie den Vakuumöffnungen der Matrizenformen 22 strömungsverbunden. Dadurch kann gewährleistet werden, dass die Vakuumliefervorrichtung durch bereits leergefahrene Matrizenplatten keine Luft ansaugt. Auf diese Weise kann eine zuverlässige Unterdruckversorgung auch an den letzten noch aktiven Matrizenplatten sichergestellt werden, bis schließlich die letzte fertiggestellte Folienverpackung entnommen wurde.

## Patentansprüche

1. Tiefziehvorrichtung zum Tiefziehen von Folie,
umfassend:
- eine Anordnung von mehreren Matrizenplatten (4), die über eine Kette durch eine Antriebseinheit in einer Umlaufbahn antreibbar ist, wobei jede Matrizenplatte (4) mehrere Rahmenvakuumbohrungen (23) und mindestens eine Matrizenform (22) mit mindestens einer Matrizenvakuumbohrung (24) aufweist,
- mindestens eine Vakuumquelle (31, 32) zur Bereitstellung eines Vakuums,
- mindestens einen Vakuumkanal (12, 13) für jede Matrizenplatte (4), wobei der mindestens eine Vakuumkanal (12, 13) die Vakuumquelle (31, 32) mit der Matrizenvakuumbohrung (24) der Matrizenform (22) und mit den Rahmenvakuumbohrungen (23) der Matrizenplatte (4) verbindet,
**dadurch gekennzeichnet, dass** die Tiefziehvorrichtung (1) für jede Matrizenplatte (4) eine Schließeinrichtung (10) zum Schließen und Öffnen des mindestens einen Vakuumkanals (12, 13) umfasst.

2. Tiefziehvorrichtung nach Anspruch 1,
**dadurch gekennzeichnet, dass** die Tiefziehvorrichtung (1) zwei Vakuumkanäle (12, 13) und zwei Vakuumquellen (31, 32) aufweist, wobei die mindestens eine Matrizenvakuumbohrung (24) und die eine Vakuumquelle (31) mittels des einen Vakuumkanals (12) strömungsleitend verbindbar ist, wobei die Rahmenvakuumbohrungen (23) und die andere Vakuumquelle (32) mittels des anderen Vakuumkanals (13) strömungsverbindbar sind, und wobei beide Vakuumkanäle (12, 13) mittels der Schließeinrichtung (10) schließbar und öffenbar sind.

3. Tiefziehvorrichtung nach Anspruch 1 oder 2,
**dadurch gekennzeichnet, dass** die Schließeinrichtung (10) ein Schieberelement (11) umfasst, das in eine Schließstellung und in eine Offenstellung des mindestens einen Vakuumkanals (12, 13) verschiebbar ist.

4. Tiefziehvorrichtung nach Anspruch 3,
**dadurch gekennzeichnet, dass** das Schieberelement (11) zwischen einer Trägerplatte (5) der Tiefziehvorrichtung (1) und der Matrizenplatte (4) mittels eines ersten Gleitelementes (17) und eines zweiten Gleitelementes (18) gelagert ist.

5. Tiefziehvorrichtung nach Anspruch 3 oder 4,
**dadurch gekennzeichnet, dass** das Schieberelement (11) als eine Schieberplatte ausgeführt ist.

6. Tiefziehvorrichtung nach einem der Ansprüche 3 bis 5,
**dadurch gekennzeichnet, dass** das Schieberelement (11) Rastöffnungen (15) aufweist, die in der Schließstellung und der Offenstellung mit federnden Druckelementen (14) der Tiefziehvorrichtung (1) verrasten.

7. Tiefziehvorrichtung nach einem der Ansprüche 1 bis 6,
**dadurch gekennzeichnet, dass** die Tiefziehmaschine (1) eine Vorrichtung zur Zuführung einzelner Folienblätter auf die einzelnen Matrizenplatten (4) umfasst.

8. Verfahren zum Tiefziehen von Folie zur Herstellung von Folienverpackungen mit einer Vorrichtung gemäß einem der Ansprüche 1 bis 7,
**dadurch gekennzeichnet, dass** der Matrizenplatte (4) ein einzelnes Folienblatt zugeführt wird, dass die Schließeinrichtung (10) den mindestens einen Verbindungskanal (12, 13) an der entsprechenden Matrizenplatte (4) von einer geschlossenen Stellung ausgehend öffnet, dass nach Öffnen des mindestens einen Verbindungskanals (12, 13) das Folienblatt auf die Matrizenplatte (4) aufgelegt wird, und dass danach die Folie durch ein Haltevakuum an den Rahmenvakuumbohrungen (23) gehalten und durch ein Tiefziehvakuum an den Matrizenvakuumbohrungen (24) in der Matrizenform (22) tiefgezogen wird.
